# EUROPÄISCHE PATENTSCHRIFT

(11) **EP 2 416 981 B1**
(45) Veröffentlichungstag und Bekanntmachung des Hinweises auf die Patenterteilung: **31.07.2013**
(21) Anmeldenummer: 11727466.2
(22) Anmeldetag: 27.06.2011
(51) Int. Cl.: B60L 9/30, H02M 1/10, H02M 5/458

(54) **STROMRICHTERSYSTEM SOWIE VERFAHREN ZUM BETREIBEN EINES STROMRICHTERSYSTEMS**
FREQUENCY CONVERTER SYSTEM AND METHOD FOR OPERATING SAME
SYSTÈME DE CONVERTISSEUR TOUT COMME PROCÉDÉ DESTINÉ AU FONCTIONNEMENT D'UN SYSTÈME DE CONVERTISSEUR

(30) Priorität: 05.07.2010 EP 10168462
(43) Veröffentlichungstag der Anmeldung: 15.02.2012
(73) Patentinhaber: ABB Technology AG, 8050 Zürich (CH)
(72) Erfinder: Huggenberger, Thomas, 5417 Untersiggenthal (CH)
(74) Vertreter: ABB Patent Attorneys
(86) Internationale Anmeldenummer: PCT/EP2011/060687
(87) Internationale Veröffentlichungsnummer: WO 2012/004146

(56) Entgegenhaltungen:
- DE-A1- 19 614 627
- DE-A1-102006 033 046

## Beschreibung

### Technisches Gebiet

Die Erfindung betrifft Stromrichtersysteme zum Einsatz in Traktionswandlern für Antriebssysteme von z.B. Schienenfahrzeugen. Insbesondere betrifft die Erfindung Stromrichtersysteme, die sowohl eine Gleichspannung als auch eine Wechselspannung verarbeiten können.

### Stand der Technik

Ein Stromrichtersystem für ein strombetriebenes Fahrzeug weist üblicherweise mehrere Netzstromrichter auf, die eine anliegende Wechselspannung, die z.B. als Oberleitungsspannung über eine Oberleitung bereitgestellt wird, in eine Gleichspannung wandeln können. Üblicherweise stellen die Netzstromrichter so eine Versorgungsgleichspannung auf mehreren Gleichspannungsleitungen zur Verfügung. Weiterhin können diese Stromrichtersysteme vorsehen, dass eine auf der Oberleitung alternativ anliegende Oberleitungsgleichspannung über eine Induktivität direkt auf den Gleichspannungsleitungen bereitgestellt wird.

Die auf den Gleichspannungsleitungen anliegende Versorgungsgleichspannung liegt an Hilfsstromrichtern und Motorstromrichtern an. Die Motorstromrichter generieren aus der Gleichspannung ein elektrisches Wechselfeld aus mehreren Phasenströmen, die zum Betreiben einer oder mehrerer elektrischer Maschinen ein umlaufendes Drehfeld ausbilden. Die Hilfsstromrichter generieren aus der anliegenden Versorgungsgleichspannung eine mehrphasige Wechselspannung, die an einen Hilfsstromtransformator angelegt wird. Ein solcher Transformator kann als Delta-Stern-Transformator konfiguriert sein und benötigt üblicherweise eine Eingangsspannung von ca. 650 VAC, um auf der Sekundärseite 400 VAC Wechselspannung zu erzeugen.

Liegt eingangsseitig eine Versorgungsgleichspannung an, so wird diese direkt den Hilfsstromrichtern bereitgestellt, so dass diese die 650 VAC generieren können. Um einen Hilfsstromrichter einzusparen, wird der ansonsten dreiphasige Hilfsstromtransformator in einem 2,5-Phasenbetrieb betrieben, bei dem eine Phase mit einem Zwischenkreispotential, das aus der anliegenden Versorgungsgleichspannung erzeugt wird, verbunden ist und die Hilfsstromrichter entsprechende Phasenspannungen bereitstellen, die so moduliert werden, dass sich die gewünschten Differenzspannungen zwischen den drei Phasen einstellen.

Mehrfach-Stromrichtersysteme für Antriebssysteme für Schienenfahrzeuge in verschiedenen Gleisnetzen sind häufig dem Problem ausgesetzt, dass eine über die Oberleitung abgegriffene Oberleitungsgleichspannung stark schwankt. Bei Schwankungen der eingangsseitigen Oberleitungsgleichspannung, insbesondere bei einem Abfall der Oberleitungsgleichspannung, kann es jedoch unter Umständen schwierig sein, die benötigten 650 VAC eingangsseitig des Delta-Stern-Transformators bereitzustellen.

Durch die im Zweiphasenbetrieb konstante Spannung der dritten Phase kann die Phase-zu-Phase-Spannung am Konverterausgang maximal der halben Zwischenkreisspannung entsprechen. Der maximale Modulationsindex beträgt somit 0,577. Da die Zwischenkreisspannung im Wechselstrombetrieb beispielsweise mindestens 3.000 VDC beträgt, während die maximale Ausgangsspannung der Hilfsstromrichter 690 VAC beträgt, liegt der benötigte Modulationsindex nur bei 0,38. Im Gleichstrombetrieb sinkt jedoch die Zwischenkreisspannung bis auf 1.000 VDC ab. Die benötigte Ausgangsspannung erfordert dabei einen Modulationsindex von bis zu 1,127, der mit dem Zweiphasenbetrieb des Hilfsstromrichters nicht erreicht werden kann.

Eine Lösung kann darin bestehen, einen DC/DC-Stromrichter zwischen der Oberleitung und den Gleichspannungsleitungen vorzusehen. Dies ist jedoch eine aufwändige Lösung, die auch die Effizienz und die Zuverlässigkeit reduziert. Wenn man jedoch eine variierende Gleichspannung auf den Gleichspannungsleitungen hinnimmt, um einen zusätzlichen DC/DC-Stromrichter zu vermeiden, so sind die Motorstromrichter in der Regel nicht stark betroffen, da üblicherweise die Geschwindigkeit und die Leistungsanforderungen bei 1,5 kV Netzoperation viel geringer sind als bei 3 kV oder bei einer Netzoperation mit Wechselstrom, bei denen die Versorgungsgleichspannung dann größer ist. Das Problem tritt hauptsächlich bei dem Hilfsstromrichter (Hilfsleistungsinverter) auf, der unabhängig von der Netzspannung eine konstante Leistung bereitstellen soll. Eine sehr gängige Lösung für dieses Problem besteht darin, einen Hilfstransformator mit Abgriffsumschaltern (Tap-Changers) vorzusehen, der teuer ist und zudem ein hohes Gewicht aufweist. Eine weitere Lösung besteht darin, den Hilfsstromrichter für eine konstante niedrige Ausgangsspannung bei einer variierenden Eingangsspannung über den gesamten möglichen Variationsbereich vorzusehen. Da dieser Stromrichter dann sowohl eine hohe Eingangsspannungsfestigkeit als auch eine hohe Ausgangsstrombelastbarkeit benötigt, ist eine hohe Anzahl von Halbleiterbauelementen notwendig.

In der DE 196 14 627 A1 ist ein gattungsgemässes Stromrichtersystem für ein Schienenfahrzeug angegeben, das in mehreren Energieversorgungssystemen betreibbar ist. Dieses Stromrichtersystem umfasst:
- Gleichspannungsleitungen zum Bereitstellen von Gleichspannungspotentialen;
- mehrere Netzstromrichter 2.1, 2.2,..., 2.n zum Wandeln einer eingangsseitigen Wechselspannung in eine Versorgungsgleichspannung auf den Gleichspannungsleitungen und
- einen für jeden Netzstromrichter 2.1, 2.2, ..., 2.n vorgesehenen Netztransformator 20.

Gemäss Fig. 1 der DE 196 14 627 A1 ist das Stromrichtersystem an einem Versorgungswechselspannungsnetz und an einem Versorgungsgleichspannungsnetz betreibbar, wobei zum Betrieb an einem Versorgungswechselspannungsnetz ein Hauptschalter 11 geschlossen wird, um eine Versorgungswechselspannung die Netzstromrichter 2.1, 2.2, ..., 2.n, insbesondere an die Netztransformatoren 20 der Netzstromrichter 2.1, 2.2, ..., 2.n anzulegen.

Darüber hinaus ist in der DE 102006 033 046 A1 auch ein gattungsgemässes Stromrichtersystem offenbart.

### Darstellung der Erfindung

Es ist Aufgabe der vorliegenden Erfindung, ein Stromrichtersystem zur Verwendung in einem Antriebsfahrzeug, insbesondere in einem Schienenfahrzeug, das für den Einsatz in mehreren Energieversorgungssystemen geeignet ist, zur Verfügung zu stellen, bei dem mit geringem Aufwand eine Hilfsenergieversorgung zur Versorgung von Verbrauchern in dem Fahrzeug bereitgestellt werden kann und das auch bei starken Schwankungen einer eingangsseitigen Versorgungsgleichspannung eine konstante Hilfsspannungsversorgung bereitstellt.

Diese Aufgabe wird durch das Stromrichtersystem, insbesondere für ein Fahrzeug, gemäß Anspruch 1 sowie durch das Verfahren zum Betreiben eines solchen Stromrichtersystems gemäß dem nebengeordneten Anspruch 10 gelöst.

Weitere vorteilhafte Ausgestaltungen sind in den abhängigen Ansprüchen angegeben.

Gemäß einem ersten Aspekt ist ein Stromrichtersystem für ein Fahrzeug, insbesondere ein Schienenfahrzeug, vorgesehen, das in mehreren Energieversorgungssystemen betreibbar ist. Das Stromrichtersystem umfasst:
- mindestens zwei Gleichspannungsleitungen zum Bereitstellen von Gleichspannungspotentialen;
- mehrere Netzstromrichter zum Wandeln einer eingangsseitigen Wechselspannung in eine Versorgungsgleichspannung auf den Gleichspannungsleitungen;
- einen Versorgungstransformator, insbesondere einen mehrphasigen Delta-Stern-Transformator, um eine Hilfsversorgungsspannung zu generieren;
- mehrere Hilfsstromrichter zum Bereitstellen von Phasenspannungen für den Versorgungstransformator,
- eine Schalteinheit, die ausgebildet ist, um in einem ersten Betriebsmodus eine anliegende Wechselspannung an die Netzstromrichter anzulegen und zudem um in einem zweiten Betriebsmodus eine anliegende Versorgungsgleichspannung an die Gleichspannungsleitungen anzulegen; und
- einen Umschalter, um in dem zweiten Betriebsmodus mindestens einen der Netzstromrichter mit dem Versorgungstransformator zu verbinden, um eine in dem mindestens einen Netzstromrichter aus der Versorgungsgleichspannung generierte Phasenspannung an den Versorgungstransformator anzulegen.

Vorzugsweise ist die umfasst die Schalteinheit zwei Schaltelemente. Eine Idee des Stromrichtersystems besteht darin, den Versorgungstransformator zum Bereitstellen der elektrischen Energie für die sonstigen Leistungsverbraucher bei Anliegen einer eingangsseitigen Wechselspannung lediglich mit den Hilfsstromrichtern zu betreiben. Wenn weniger, z.B. nur zwei, taktende Hilfsstromrichter verwendet werden, kann als eine weitere Phasenspannung ein konstantes Gleichspannungspotential der Gleichspannungsleitungen abgegriffen werden. Im Gleichspannungsbetrieb wird mindestens ein weiterer Netzstromrichter, der nicht mehr für die Wandlung einer eingangsseitigen Wechselspannung verwendet wird, gemeinsam mit den Hilfsstromrichtern verwendet, um Phasenspannungen für die mehrphasige Ansteuerung des Versorgungstransformators zu generieren. Mithilfe des Netzstromrichters und der Hilfsstromrichter können alle Phasenspannungen für den Versorgungstransformator unabhängig voneinander generiert werden, so dass sich Schwankungen der im zweiten Betriebsmodus als Versorgungsgleichspannung direkt genutzten eingangsseitigen Versorgungsgleichspannung (Oberleitungsspannung) in verbesserter Weise ausgleichen lassen.

Weiterhin kann der Umschalter ausgebildet sein, um im ersten Betriebsmodus eine der Gleichspannungsleitungen, insbesondere eine Zwischenkreisspannungsleitung, mit dem Versorgungstransformator zu verbinden.

Insbesondere kann eine Steuereinheit vorgesehen sein, um in dem ersten Betriebsmodus die Hilfsstromrichter so anzusteuern, dass Phasenspannungen zum Anlegen an den Versorgungstransformator generiert werden, wobei die Phasenspannungen gegenüber dem Spannungspotential der über den Umschalter verbundenen Gleichspannungsleitung so moduliert werden, dass an dem Versorgungstransformator Phasen-zu-Phasen-Spannungen anliegen, die gleiche Phasenwinkel zueinander aufweisen.

Gemäß einer Ausführungsform kann der Umschalter so vorgesehen sein, um in dem zweiten Betriebsmodus eine Anzahl der Netzstromrichter mit dem Versorgungstransformator zu verbinden, die einer Phasenanzahl des Versorgungstransformator entspricht, um eine in dem mindestens einen Netzstromrichter aus der Versorgungsgleichspannung generierte Phasenspannung an den Versorgungstransformator anzulegen.

Weiterhin kann eine Steuereinheit vorgesehen sein, um die Netzstromrichter so anzusteuern, dass diese in dem ersten Betriebsmodus eine Versorgungsgleichspannung aus einer anliegenden Wechselspannung generieren und in dem zweiten Betriebsmodus Phasenspannungen zum Anlegen an den Versorgungstransformator aus der Versorgungsgleichspannung generieren.

Es können einer oder mehrere Motorstromrichter vorgesehen sein, die über die Versorgungsgleichspannung auf den Gleichspannungsleitungen versorgt werden. Insbesondere können die Netzstromrichter und die Hilfsstromrichter gleichartig aufgebaut sein.

Die Netzstromrichter und die Hilfsstromrichter können beispielsweise als Inverterschaltungen aufgebaut sein.

Gemäß einem weiteren Aspekt ist vorgesehen, das obige Stromrichtersystem in einem Traktionssystem für ein Schienenfahrzeug zu verwenden.

Gemäß einem weiteren Aspekt ist ein Verfahren zum Betreiben eines Stromrichtersystems für ein Fahrzeug, insbesondere ein Schienenfahrzeug, vorgesehen, das in mehreren Energieversorgungssystemen betreibbar ist. Das Stromrichtersystem umfasst:
- mindestens zwei Gleichspannungsleitungen zum Bereitstellen von Gleichspannungspotentialen;
- mehrere Netzstromrichter zum Wandeln einer eingangsseitigen Wechselspannung in eine Versorgungsgleichspannung auf den Gleichspannungsleitungen;
- einen Versorgungstransformator, insbesondere einen mehrphasigen Delta-Stern-Transformator, um eine Hilfsversorgungsspannung zu generieren;
- mehrere Hilfsstromrichter zum Bereitstellen von Phasenspannungen für den Versorgungstransformator;
   wobei das Verfahren folgende Schritte aufweist:
- Anlegen der eingangsseitigen Wechselspannung an die Netzstromrichter (8) im Falle eines ersten Betriebsmodus;
- Anlegen einer eingangsseitigen Versorgungsgleichspannung an die Gleichspannungsleitungen (5, 6, 7) im Falle eines zweiten Betriebsmodus;
- Verbinden mindestens eines der Netzstromrichter (8) mit dem Versorgungstransformator (21) im Falle des zweiten Betriebsmodus, um eine in dem mindestens einen Netzstromrichter (8) aus der Versorgungsgleichspannung generierte Phasenspannung an den Versorgungstransformator (21) anzulegen.

### Kurze Beschreibung der Zeichnungen

Bevorzugte Ausführungsformen der vorliegenden Erfindung werden nachfolgend anhand der beigefügten Zeichnungen näher erläutert. Es zeigen:
- Figur 1: eine schematische Darstellung eines Stromrichtersystems zur Verwendung in einem Schienenfahrzeug;

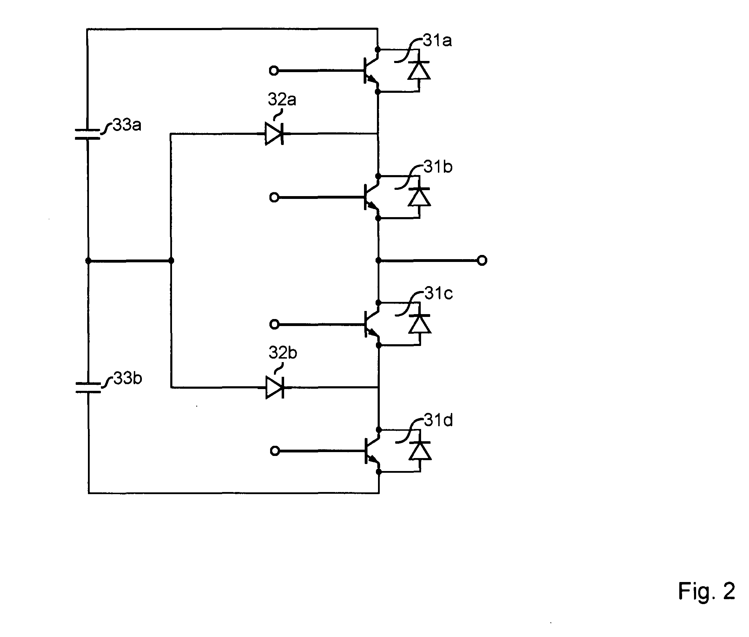

- Figur 2: eine schematische Darstellung des Aufbaus eines Stromrichters des Stromrichtersystems der Figur 1;
- Figur 3: eine schematische Darstellung des Stromrichtersystems in einem von Figur 1 verschiedenen Schaltzustand zum Betreiben an einer Versorgungsgleichspannung; und
- Figur 4: eine schematische Darstellung eines Stromrichtersystems gemäß einer weiteren Ausführungsform.

Die in der Zeichnung verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen. Die beschriebenen Ausführungsformen stehen beispielhaft für den Erfindungsgegenstand und haben keine beschränkende Wirkung.

### Wege zur Ausführung der Erfindung

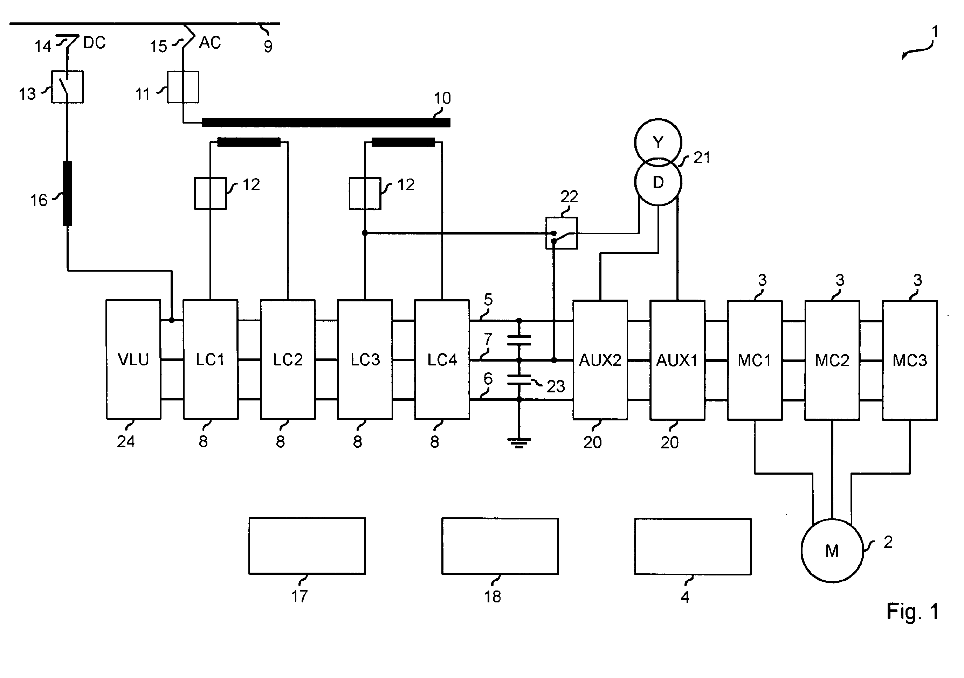

In Figur 1 ist ein Stromrichtersystem 1 zur Verwendung in einem Schienenfahrzeug oder dergleichen dargestellt. Das Schienenfahrzeug wird über einen Antriebsmotor 2 betrieben, der seine elektrische Leistung von drei Motorstromrichtern 3 bezieht, die im Wesentlichen gleichartig aufgebaut sind. Die Motorstromrichter 3 werden von einer Motorsteuereinheit 4 angesteuert, so dass diese als DC/AC-Wandler betrieben werden. Die Motorstromrichter 3 stellen drei Phasenspannungen zum Betrieb des Antriebsmotors 2 zur Verfügung. Bei mehrphasigen elektrischen Maschinen als Antriebsmotor wird allgemein eine Anzahl von Motorstromrichtern 3 verwendet, die der Anzahl der Phasen der elektrischen Maschine entspricht.

Eingangsseitig wird an die Motorstromrichter 3 eine Versorgungsgleichspannung angelegt. Die eingangsseitige Versorgungsgleichspannung wird über eine erste Gleichspannungsleitung 5 zum Bereitstellen eines hohen Gleichspannungspotentials, eine zweite Gleichspannungsleitung 6 zum Bereitstellen eines niedrigen Gleichspannungspotentials, das vorzugsweise mit einem Massepotential gekoppelt ist, und eine Zwischenkreisspannungsleitung 7 zum Bereitstellen eines Zwischenkreispotentials bereitgestellt.

Die Motorstromrichter 3 werden von einer ersten Steuereinheit 4 angesteuert, um die auf den Gleichspannungsleitungen 5, 6, 7 anliegenden Gleichspannungspotentiale in entsprechende Phasenspannungen zu wandeln.

Weiterhin sind Netzstromrichter 8 (LC1 bis LC4) vorgesehen, die eine Versorgungswechselspannung in die Versorgungsgleichspannung wandeln sollen, die zwischen der ersten Versorgungsleitung 5 und der zweiten Versorgungsleitung 6 bereitgestellt werden soll. Die Versorgungswechselspannung wird beispielsweise von einer Oberleitung 9 über einen ersten Oberleitungsabgriff 15 abgegriffen und einer Primärseite eines Eingangstransformators 10 zugeführt und es wird eine entsprechende Wechselspannung, die sekundärseitig des Eingangstransformators abgegriffen wird, jeweils zweien der Eingangsstromrichter 8 bereitgestellt.

Die Netzstromrichter 8 werden von einer zweiten Steuereinheit 17 angesteuert, um bei einem Betrieb mit einer Versorgungswechselspannung die über den Eingangstransformator 10 bereitgestellte, an den Netzstromrichtern 8 anliegende Wechselspannung in eine entsprechende Versorgungsgleichspannung zu wandeln.

Um den Eingangstransformator 10 galvanisch von den Netzstromrichtern 8 zu trennen, ist jeweils zwischen der Oberleitung 9 und dem Eingangstransformator 10 ein erstes Schaltelement 11 und auf der Sekundärseite des Eingangstransformators 10 ein zweites Schaltelement 12 vorgesehen, um die Sekundärseite des Eingangstransformators 10 von den Netzstromrichtern 8 zu trennen.

Weiterhin ist ein drittes Schaltelement 13 vorgesehen, das zwischen einem zweiten Oberleitungsabgriff 14 und der ersten Gleichspannungsleitung 5 vorgesehen ist und dann geschlossen wird, wenn die Oberleitung 9 eine Versorgungsgleichspannung trägt. Zwischen dem dritten Schaltelement 13 und der ersten Gleichspannungsleitung 5 ist weiterhin eine Induktivität 16 vorgesehen, um Gleichspannungsschwankungen durch eine Tiefpassfilterwirkung zu glätten.

Eine Schalteinheit umfasst das erste Schaltelement 11 und das dritte Schaltelement 13 und ist ausgebildet, um in einem ersten Betriebsmodus eine anliegende Wechselspannung an die Netzstromrichter 8 anzulegen und um in einem zweiten Betriebsmodus eine anliegende Versorgungsgleichspannung an die Gleichspannungsleitungen 5, 6, 7 anzulegen.

Weiterhin sind zwei Hilfsstromrichter 20 (AUX1, AUX2) vorgesehen, die ebenfalls an der ersten Gleichspannungsleitung 5, der zweiten Gleichspannungsleitung 6 und der Zwischenkreisspannungsleitung 7 angeschlossen sind. Die Hilfsstromrichter 20 sind mit einem dreiphasigen Versorgungstransformator 21 verbunden, wobei jeder der Hilfsstromrichter 20 eine Phase für den Versorgungstransformator 21 bereitstellt und eine dritte Phase des Versorgungstransformators 21 mit dem Zwischenkreispotential der Zwischenkreisspannungsleitung 7 verbunden ist.

Zwischen dem Versorgungstransformator 21 und der Zwischenkreisspannungsleitung 7 ist ein Umschalter 22 vorgesehen, der bei Betrieb mit einer Versorgungswechselspannung, d.h. bei Anlegen des ersten Oberleitungsabgriffs 15 an die Oberleitung 9 und beim Schließen (Leitendschalten) des ersten Schaltelements 11 und der zweiten Schaltelemente 12, das Zwischenkreispotential an den Versorgungstransformator 21 anlegt. Somit wird der Versorgungstransformator 21 mit einem 2,5-Phasenbetrieb betrieben.

Die Hilfsstromrichter 20 werden über eine dritte Steuereinheit 18 angesteuert, um die auf der ersten Gleichspannungsleitung 5, der zweiten Gleichspannungsleitung 6 und der Zwischenkreisspannungsleitung 7 anliegenden Potentiale in entsprechende Phasenspannungen für den Versorgungstransformator 21 zu wandeln. Die zwei Phasenspannungen werden so generiert, dass sich in Verbindung mit dem an dem dritten Anschluss der Primärseite des Versorgungstransformators 21 anliegenden Zwischenkreispotential jeweils Spannungsdifferenzen ergeben, wie sie bei einem dreiphasigen Betrieb des Versorgungstransformators 21 anliegen würden. Mit anderen Worten werden die beiden taktenden Phasen so moduliert, dass sich die gewünschten Differenzspannungen zwischen den drei Phasen einstellen. Dabei entsteht eine große Gleichtaktspannung auf dem Dreiphasensystem, die den in Delta-Stern-Konfiguration aufgebauten Versorgungstransformator 21 nicht durchlaufen kann und daher keinen Nachteil darstellt.

Die Zwischenkreisspannung auf der Zwischenkreisspannungsleitung 7 ergibt sich aus der Ansteuerung der Motorstromrichter 3, der Netzstromrichter 8 und der Hilfsstromrichter 20 durch die erste, zweite bzw. dritte Steuereinheit 4, 17, 18. Diese betreiben die jeweiligen Stromrichter so, dass das Potential auf der Zwischenkreisspannungsleitung 7 im Wesentlichen einem Mittenpotential zwischen den Potentialen auf der ersten Gleichspannungsleitung 5 und der zweiten Gleichspannungsleitung 6 entspricht. Um Schwankungen auf der Zwischenkreisspannungsleitung 7 zu glätten, sind Zwischenkreiskapazitäten 23 vorgesehen, die jeweils zwischen der ersten Gleichspannungsleitung 5 und der Zwischenkreisspannungsleitung 7 bzw. zwischen der zweiten Gleichspannungsleitung 6 und der Zwischenkreisspannungsleitung 7 angeordnet sind.

Weiterhin ist eine Spannungsbegrenzungseinheit 24 vorgesehen, die eine Überspannung auf den Gleichspannungsleitungen 5, 6, 7 begrenzen kann.

Die Stromrichter 3, 8, 20 sind vorzugsweise gleichartig aufgebaut. Die Stromrichter 3, 8, 20 können als Inverterschaltungen aufgebaut sein und weisen im Wesentlichen eine Serienschaltung von vier Leistungshalbleiterschaltern 31 auf, nämlich eines ersten bis vierten Leistungshalbleiterschalters 31a bis 31d. Ein erster Anschluss des ersten Leistungshalbleiterschalters 31 a ist mit der ersten Gleichspannungsleitung 5 und ein zweiter Anschluss des ersten Leistungshalbleiterschalters 31a ist mit einem ersten Anschluss des ersten Leistungshalbleiterschalters 31 a verbunden. Ein zweiter Anschluss des zweiten Leistungshalbleiterschalters 31 b ist mit einem ersten Anschluss des dritten Leistungshalbleiterschalters 31c verbunden und stellt gleichzeitig einen Ausgang bzw. Anschluss des entsprechenden Stromrichters 3, 8, 20 dar. Ein zweiter Anschluss des dritten Leistungshalbleiterschalters 31 c ist mit einem ersten Anschluss des vierten Leistungshalbleiterschalters 31d verbunden. Ein zweiter Anschluss des vierten Leistungshalbleiterschalters 31 d ist mit der zweiten Gleichspannungsleitung 6 verbunden.

Weiterhin weist der entsprechende Stromrichter 3, 8, 20 eine erste Diode 32a auf, die mit ihrem Anodenanschluss mit der Zwischenkreisspannungsleitung 7 und mit ihrem Kathodenanschluss mit dem zweiten Anschluss des ersten Leistungshalbleiterschalters 31 a verbunden ist. Weiterhin ist die Zwischenkreisspannungsleitung 7 mit einem Kathodenanschluss einer zweiten Diode 32b verbunden, deren Anodenanschluss mit dem zweiten Anschluss des dritten Leistungshalbleiterschalters 31 c verbunden ist. Weiterhin sind in jedem der Stromrichter 3, 8, 20 weitere Zwischenkreiskapazitäten 33a, 33b vorgesehen, die jeweils zwischen einer der Gleichspannungsleitungen 5, 6 und der Zwischenkreisspannungsleitung 7 angeschlossen sind.

Derartige Inverterschaltungen haben den Vorteil, dass diese in zwei Richtungen betrieben werden können und entsprechend ihrer Ansteuerung eine Wechselspannung in eine Gleichspannung oder eine Gleichspannung in eine Wechselspannung wandeln können.

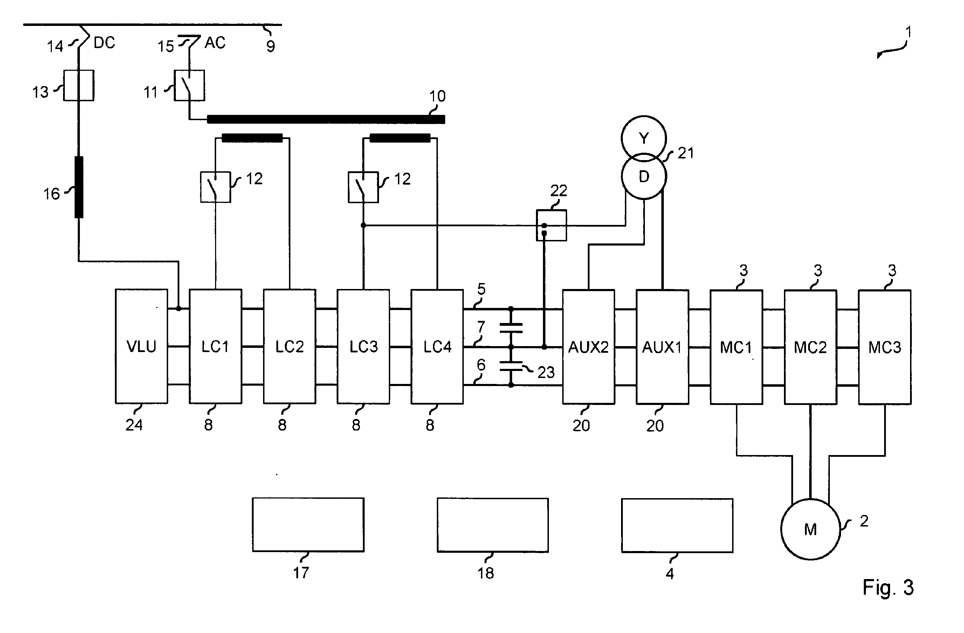

In Figur 3 ist eine Schaltstellung des Stromrichtersystems 1 in einem Gleichspannungsbetrieb dargestellt. In dieser Betriebsart ist das dritte Schaltelement 13 geschlossen (leitend) und der zweite Oberleitungsabgriff 14 kontaktiert die Oberleitung 9. Das erste Schaltelement 11 und die zweiten Schaltelemente 12 sind geöffnet und der erste Oberleitungsabgriff 15 ist von der Oberleitung 9 getrennt. Somit erhalten die Versorgungsstromrichter 8 keine Wechselspannung über die Oberleitung 9. Stattdessen wird die eingangsseitige Versorgungsgleichspannung der Oberleitung 9 auf die erste Gleichspannungsleitung 5 angelegt.

Da bei schwankenden Versorgungsgleichspannungen auf der Oberleitung 9 ein 2,5-Phasenbetrieb nicht gewährleistet werden kann, ist nun vorgesehen, den Umschalter 22 so zu schalten, dass dieser mit einem der Versorgungsstromrichter 8, im vorliegenden Fall mit dem Versorgungsstromrichter LC3, verbunden ist. Mithilfe der zweiten Steuereinheit 17 wird nun der entsprechende Netzstromrichter 8 so angesteuert, dass er im Umkehrbetrieb bezüglich des Wechselspannungsbetriebs die Versorgungsgleichspannungen auf der ersten und zweiten Gleichspannungsleitung 5, 6 und der Zwischenkreisspannungsleitung 7 in eine entsprechende Phasenspannung für den Versorgungstransformator 21 wandelt. Der Versorgungstransformator 21 wird dann über die beiden Hilfsstromrichter 20 und einen der Versorgungsstromrichter 8 im Dreiphasenbetrieb betrieben. Dadurch wird erreicht, dass selbst wenn im Gleichspannungsbetrieb die Zwischenkreisspannung zu weit absinkt, um in einem 2,5-Phasenbetrieb des Versorgungstransformators 21 die notwendige Primärspannung von 650 V AC bereitzustellen, in dem Dreiphasenbetrieb anstelle der Zwischenkreisspannung eine dritte Phasenspannung bereitgestellt wird, so dass die Anforderungen an das Bereitstellen der Phasenspannung durch die Hilfsstromrichter 20 verringert werden.

Eine solche Lösung hat den Vorteil, dass die im Mehrsystemstromrichter stark variierenden Anforderungen an die Hilfsstromrichter 20 lediglich durch das Vorsehen des Umschalters 22 erfüllt werden können, mit dem ein weiterer Stromrichter aus den in diesem Betriebsfall ungenutzten Netzstromrichtern 8 umgewidmet wird und die dritte Phasenspannung für den Versorgungstransformator 21 bereitstellt.

Im Dreiphasenbetrieb steht weiter gemeinsam mit den Hilfsstromrichtern 20 (AUX1, AUX2) ein leistungsfähiges Instrument zur Zwischenkreissymmetrierung zur Verfügung, welches beim herkömmlichen Betrieb unter Verwendung des Zwischenkreispotentials für den 2,5-Phasen-Betrieb bei der herkömmlichen Anordnung nicht realisiert werden könnte. Ein weiterer Vorteil besteht darin, für den Netzstromrichter 8, den Motorstromrichter 3 und die Hilfsstromrichter 20 identische Stromrichter zu verwenden, so dass an allen Stromrichtern 3, 8, 20 eine sehr ähnliche thermische Belastung auftritt.

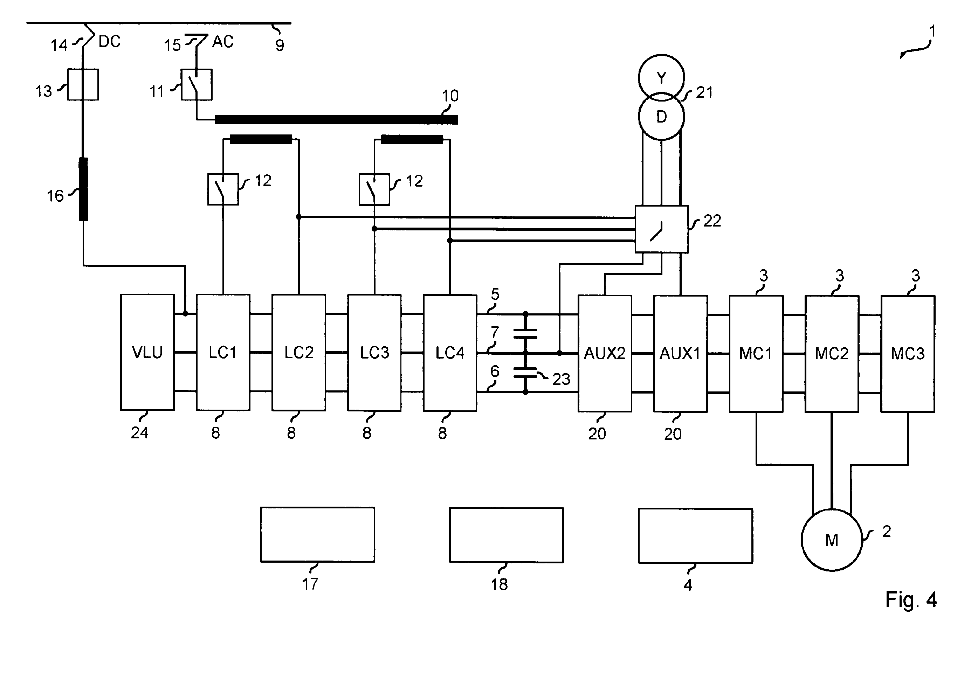

Wie in Figur 4 dargestellt, kann der Umschalter 22 zusätzlich auch zum Umschalten zwischen einem oder mehreren der Netzstromrichter 8 und entsprechenden Hilfsstromrichtern 20 vorgesehen sein. In Figur 4 ist beispielsweise ein modifizierter Umschalter 22' vorgesehen, der beim Gleichspannungsbetrieb die Hilfsstromrichter 20 vollständig von dem Versorgungstransformator 21 trennt und stattdessen drei der Netzstromrichter 8 zum Generieren der drei Phasenspannungen zum Anlegen an die Primärseite mit dem Versorgungstransformator 21 verbindet. Dies hat den Vorteil, dass bei Verwendung von voneinander getrennten Steuereinheiten zur Ansteuerung der Netzstromrichter 8 und der Hilfsstromrichter 20 die Generierung der Phasenspannungen für den Versorgungstransformator 21 von drei der Netzstromrichter 8 übernommen werden kann, die über die zweite Steuereinheit 17 angesteuert werden.

### Bezugszeichenliste

- 1: Stromrichtersystem
- 2: Antriebsmotor
- 3: Motorstromrichter
- 4: erste Steuereinheit
- 5: erste Gleichspannungsleitung
- 6: zweite Gleichspannungsleitung
- 7: Zwischenkreisspannungsleitung
- 8: Netzstromrichter
- 9: Oberleitung
- 10: Netztransformator
- 11: erstes Schaltelement
- 12: zweites Schaltelement
- 13: drittes Schaltelement
- 14: zweiter Oberleitungsabgriff
- 15: erster Oberleitungsabgriff
- 16: Induktivität
- 17: zweite Steuereinheit
- 18: dritte Steuereinheit
- 20: Hilfsstromrichter
- 21: Versorgungstransformator
- 22: Umschalter
- 23: Zwischenkreiskapazität
- 31a bis 31d: erster bis vierter Leistungshalbleiterschalter
- 32a, 32b: erste, zweite Diode
- 33a, 33b: erste, zweite Zwischenkreiskapazität

## Patentansprüche

1. Stromrichtersystem (1) für ein Fahrzeug, insbesondere ein Schienenfahrzeug, das in mehreren Energieversorgungssystemen betreibbar ist, umfassend:
- mindestens zwei Gleichspannungsleitungen (5, 6, 7) zum Bereitstellen von Gleichspannungspotentialen;
- mehrere Netzstromrichter (8) zum Wandeln einer eingangsseitigen Wechselspannung in eine Versorgungsgleichspannung auf den Gleichspannungsleitungen;
- einen Versorgungstransformator (21), insbesondere einen mehrphasigen Delta-Stern-Transformator, um eine Hilfsversorgungsspannung zu generieren;
- mehrere Hilfsstromrichter (20) zum Bereitstellen von Phasenspannungen für den Versorgungstransformator,
**gekennzeichnet durch**:
- eine Schalteinheit (11, 13), die ausgebildet ist, um in einem ersten Betriebsmodus eine anliegende Wechselspannung an die Netzstromrichter (8) anzulegen und um in einem zweiten Betriebsmodus eine anliegende Versorgungsgleichspannung an die Gleichspannungsleitungen (5, 6, 7) anzulegen; und
- einen Umschalter (22), um in dem zweiten Betriebsmodus mindestens einen der Netzstromrichter (8) mit dem Versorgungstransformator (21) zu verbinden, um eine in dem mindestens einen Netzstromrichter (8) aus der Versorgungsgleichspannung generierte Phasenspannung an den Versorgungstransformator (21) anzulegen.

2. Stromrichtersystem (1) nach Anspruch 1, wobei der Umschalter (22) ausgebildet ist, um im ersten Betriebsmodus eine der Gleichspannungsleitungen (5, 6, 7), insbesondere eine Zwischenkreisspannungsleitung, mit dem Versorgungstransformator (21) zu verbinden.

3. Stromrichtersystem (1) nach Anspruch 2, wobei eine Steuereinheit (18) vorgesehen ist, um in dem ersten Betriebsmodus die Hilfsstromrichter (20) so anzusteuern, dass Phasenspannungen zum Anlegen an den Versorgungstransformator (21) generiert werden, wobei die Phasenspannungen gegenüber dem Spannungspotential der über den Umschalter (22) verbundenen Gleichspannungsleitung (5, 6, 7) so moduliert werden, dass an dem Versorgungstransformator (21) Phasen-zu-Phasen-Spannungen anliegen, die gleiche Phasenwinkel zueinander aufweisen.

4. Stromrichtersystem (1) nach einem der Ansprüche 1 bis 3, wobei der Umschalter (22) so vorgesehen ist, um in dem zweiten Betriebsmodus eine Anzahl der Netzstromrichter (8) mit dem Versorgungstransformator (21) zu verbinden, die einer Phasenanzahl des Versorgungstransformators (21) entspricht, um eine in dem mindestens einen Netzstromrichter (8) aus der Versorgungsgleichspannung generierte Phasenspannung an den Versorgungstransformator (21) anzulegen.

5. Stromrichtersystem (1) nach Anspruch 4, wobei eine weitere Steuereinheit (17) vorgesehen ist, um die Netzstromrichter (8) so anzusteuern, dass diese in dem ersten Betriebsmodus eine Versorgungsgleichspannung aus einer anliegenden Wechselspannung generieren und in dem zweiten Betriebsmodus Phasenspannungen zum Anlegen an den Versorgungstransformator (21) aus der Versorgungsgleichspannung generieren.

6. Stromrichtersystem (1) nach einem der Ansprüche 1 bis 5, wobei einer oder mehrere Motorstromrichter (3) vorgesehen sind, die über die Versorgungsgleichspannung auf den Gleichspannungsleitungen versorgt werden.

7. Stromrichtersystem (1) nach einem der Ansprüche 1 bis 6, wobei die Netzstromrichter (8) und die Hilfsstromrichter (20) gleichartig aufgebaut sind.

8. Stromrichtersystem (1) nach einem der Ansprüche 1 bis 7, wobei die Netzstromrichter (8) und die Hilfsstromrichter (20) als Inverterschaltungen aufgebaut sind.

9. Verwendung des Stromrichtersystems nach einem der Ansprüche 1 bis 8 in einem Traktionssystem für ein Schienenfahrzeug.

10. Verfahren zum Betreiben eines Stromrichtersystems (1) für ein Fahrzeug, insbesondere ein Schienenfahrzeug, das in mehreren Energieversorgungssystemen betreibbar ist, wobei das Stromrichtersystem (1) umfasst:
- mindestens zwei Gleichspannungsleitungen (5, 6, 7) zum Bereitstellen von Gleichspannungspotentialen;
- mehrere Netzstromrichter (8) zum Wandeln einer eingangsseitigen Wechselspannung in eine Versorgungsgleichspannung auf den Gleichspannungsleitungen (5, 6, 7);
- einen Versorgungstransformator (21), insbesondere einen mehrphasigen Delta-Stern-Transformator, um eine Hilfsversorgungsspannung zu generieren;
- mehrere Hilfsstromrichter (20) zum Bereitstellen von Phasenspannungen für den Versorgungstransformator (21);
wobei das Verfahren folgende Schritte aufweist:
- Anlegen der eingangsseitigen Wechselspannung an die Netzstromrichter (8) im Falle eines ersten Betriebsmodus;
- Anlegen einer eingangsseitigen Versorgungsgleichspannung an die Gleichspannungsleitungen (5, 6, 7) im Falle eines zweiten Betriebsmodus;
- Verbinden mindestens eines der Netzstromrichter (8) mit dem Versorgungstransformator (21) im Falle des zweiten Betriebsmodus, um eine in dem mindestens einen Netzstromrichter (8) aus der Versorgungsgleichspannung generierte Phasenspannung an den Versorgungstransformator (21) anzulegen.

## Claims

1. Power converter system (1) for a vehicle, in particular a rail vehicle, which can be operated in a plurality of energy supply systems, comprising:
- at least two DC voltage lines (5, 6, 7) for providing DC voltage potentials;
- a plurality of power supply system power converters (8) for converting an input-side AC voltage into a DC supply voltage on the DC voltage lines;
- a supply transformer (21), in particular a polyphase delta-star transformer, for generating an auxiliary supply voltage;
- a plurality of auxiliary power converters (20) for providing phase voltages for the supply transformer,
**characterized by**:
- a switching unit (11, 13), which is designed to apply a present AC voltage to the power supply system power converters (8) in a first operating mode and to apply a present DC supply voltage to the DC voltage lines (5, 6, 7) in a second operating mode; and
- a changeover switch (22) for connecting at least one of the power supply system power converters (8) to the supply transformer (21) in the second operating mode in order to apply a phase voltage, generated in the at least one power supply system power converter (8) from the DC supply voltage, to the supply transformer (21).

2. Power converter system (1) according to Claim 1, wherein the changeover switch (22) is designed to connect one of the DC voltage lines (5, 6, 7), in particular an intermediate-circuit voltage line, to the supply transformer (21) in the first operating mode.

3. Power converter system (1) according to Claim 2, wherein a control unit (18) is provided for actuating the auxiliary power converter (20) in the first operating mode in such a way that phase voltages are generated for application to the supply transformer (21), wherein the phase voltages are modulated with respect to the voltage potential of the DC voltage line (5, 6, 7) connected via the changeover switch (22) in such a way that phase-to-phase voltages which have the same phase angle with respect to one another are present across the supply transformer (21).

4. Power converter system (1) according to one of Claims 1 to 3, wherein the changeover switch (22) is provided in order to connect a number of power supply system power converters (8) which corresponds to a phase number of the supply transformer (21) to the supply transformer (21) in the second operating mode in order to apply a phase voltage, generated in the at least one power supply system power converter (8) from the DC supply voltage, to the supply transformer (21).

5. Power converter system (1) according to Claim 4, wherein a further control unit (17) is provided for actuating the power supply system power converters (8) in such a way that said power supply system power converters generate a DC supply voltage from a present AC voltage in the first operating mode and generate phase voltages for application to the supply transformer (21) from the DC supply voltage in the second operating mode.

6. Power converter system (1) according to one of Claims 1 to 5, wherein one or more motor power converters (3) are provided which are supplied via the DC supply voltage on the DC voltage lines.

7. Power converter system (1) according to one of Claims 1 to 6, wherein the power supply system power converters (8) and the auxiliary power converters (20) have an identical design.

8. Power converter system (1) according to one of Claims 1 to 7, wherein the power supply system power converters (8) and the auxiliary power converters (20) are in the form of inverter circuits.

9. Use of the power converter system according to one of Claims 1 to 8 in a traction system for a rail vehicle.

10. Method for operating a power converter system (1) for a vehicle, in particular a rail vehicle, which can be operated in a plurality of energy supply systems, wherein the power converter system (1) comprises:
- at least two DC voltage lines (5, 6, 7) for providing DC voltage potentials;
- a plurality of power supply system power converters (8) for converting an input-side AC voltage into a DC supply voltage on the DC voltage lines (5, 6, 7);
- a supply transformer (21), in particular a polyphase delta-star transformer, for generating an auxiliary supply voltage;
- a plurality of auxiliary power converters (20) for providing phase voltages for the supply transformer (21);
wherein the method has the following steps:
- applying the input-side AC voltage to the power supply system power converters (8) in the case of a first operating mode;
- applying an input-side DC supply voltage to the DC voltage lines (5, 6, 7) in the case of a second operating mode;
- connecting at least one of the power supply system power converters (8) to the supply transformer (21) in the case of the second operating mode in order to apply a phase voltage, generated in the at least one power supply system power converter (8) from the DC supply voltage, to the supply transformer (21).

## Revendications

1. Système de convertisseur (1) pour un véhicule, notamment un véhicule sur rails, pouvant être mis en oeuvre dans plusieurs systèmes d'alimentation en énergie, comprenant :
- au moins deux câbles de tension continue (5, 6, 7) permettant de mettre à disposition des potentiels de tension continue ;
- plusieurs convertisseurs de courant de secteur (8) permettant de convertir une tension alternative amenée en entrée en une tension d'alimentation continue des câbles de tension continue ;
- un transformateur d'alimentation (21), notamment un transformateur delta-étoile polyphasé, permettant de générer une tension d'alimentation auxiliaire ;
- plusieurs convertisseurs de courant auxiliaire (20) permettant de mettre à disposition des tensions de phase pour le transformateur d'alimentation ; **caractérisé par** :
- une unité de connexion (11, 13) conçue pour appliquer une tension alternative régnant au niveau des convertisseurs de courant de secteur (8) dans un premier mode de fonctionnement et pour appliquer une tension d'alimentation continue régnant au niveau des câbles de tension continue (5, 6, 7) dans un deuxième mode de fonctionnement ; et
- un commutateur (22) permettant de relier au moins un des convertisseurs de courant de secteur (8) au transformateur d'alimentation (21) dans le deuxième mode de fonctionnement, pour appliquer au transformateur d'alimentation (21) une tension de phase générée à partir de la tension d'alimentation continue dans l'au moins un convertisseur de courant de secteur (8).

2. Système de convertisseur (1) selon la revendication 1, le commutateur (22) étant réalisé de façon à relier un des câbles de tension continue (5, 6, 7), notamment un câble de courant indirect, au transformateur d'alimentation (21) dans le premier mode de fonctionnement.

3. Système de convertisseur (1) selon la revendication 2, une unité de commande (18) étant prévue pour commander dans le premier mode de fonctionnement les convertisseurs de courant auxiliaire (20) de façon à générer des tensions de phase pour les appliquer au transformateur d'alimentation (21), les tensions de phase étant modulées par rapport au potentiel de tension du câble de tension continue (5, 6, 7) relié par le biais du commutateur (22) de telle sorte que des tensions phases à phases comportant les mêmes angles de phase les unes par rapport aux autres règnent au niveau du transformateur d'alimentation (21).

4. Système de convertisseur (1) selon l'une quelconque des revendications 1 à 3, le commutateur (22) étant conçu pour relier dans le deuxième mode de fonctionnement un certain nombre de convertisseurs de courant de secteur (8) au transformateur d'alimentation (21), ledit nombre correspondant à un nombre de phases du transformateur d'alimentation (21) permettant d'appliquer au transformateur d'alimentation (21) une tension de phase générée à partir de la tension d'alimentation continue dans l'au moins un convertisseur de courant de secteur (8).

5. Système de convertisseur (1) selon la revendication 4, une unité de commande supplémentaire (17) étant prévue pour commander les convertisseurs de courant de secteur (8) de telle sorte qu'ils génèrent dans le premier mode de fonctionnement une tension alternative appliquée à partir d'une tension d'alimentation continue et qu'ils génèrent dans le deuxième mode de fonctionnement des tensions de phase à appliquer au transformateur d'alimentation (21) à partir de la tension d'alimentation continue.

6. Système de convertisseur (1) selon l'une quelconque des revendications 1 à 5, un ou plusieurs convertisseurs de courant moteur (3) étant prévus, lesdits convertisseurs étant alimentés par la tension d'alimentation continue des câbles de tension continue.

7. Système de convertisseur (1) selon l'une quelconque des revendications 1 à 6, les convertisseurs de courant de secteur (8) et les convertisseurs de courant auxiliaire (20) présentant une structure similaire.

8. Système de convertisseur (1) selon l'une quelconque des revendications 1 à 7, les convertisseurs de courant de secteur (8) et les convertisseurs de courant auxiliaire (20) prenant la forme de circuits d'inversion.

9. Utilisation du système de convertisseur selon l'une quelconque des revendications 1 à 8 pour un système de traction pour un véhicule sur rails.

10. Procédé de mise en oeuvre d'un système de convertisseur (1) pour un véhicule, notamment un véhicule sur rails, pouvant être mis en oeuvre dans plusieurs systèmes d'alimentation en énergie, le système de convertisseur (1) comprenant :
- au moins deux câbles de tension continue (5, 6, 7) permettant de mettre à disposition des potentiels de tension continue ;
- plusieurs convertisseurs de courant de secteur (8) permettant de convertir une tension alternative amenée en entrée en une tension d'alimentation continue des câbles de tension continue (5, 6, 7);
- un transformateur d'alimentation (21), notamment un transformateur delta-étoile polyphasé, permettant de générer une tension d'alimentation auxiliaire ;
- plusieurs convertisseurs de courant auxiliaire (20) permettant de mettre à disposition des tensions de phase pour le transformateur d'alimentation (21);
le procédé présentant les étapes suivantes :
- application de la tension alternative régnant du côté d'entrée aux convertisseurs de courant de secteur (8) dans le cas d'un premier mode de fonctionnement ;
- application d'une tension d'alimentation continue régnant du côté d'entrée aux câbles de tension continue (5, 6, 7) dans le cas d'un deuxième mode de fonctionnement ;
- liaison d'au moins un des convertisseurs de courant de secteur (8) avec le transformateur d'alimentation (21) dans le cas du deuxième mode de fonctionnement, pour appliquer au transformateur d'alimentation (21) une tension de phase générée à partir de la tension d'alimentation continue dans l'au moins un convertisseur de courant de secteur (8).
